# EUROPÄISCHE PATENTSCHRIFT

(11) **EP 1 736 229 B1**
(45) Veröffentlichungstag und Bekanntmachung des Hinweises auf die Patenterteilung: **03.04.2013**
(21) Anmeldenummer: 05104725.6
(22) Anmeldetag: 24.06.2005
(51) Int. Cl.: B01D 53/00, B01D 5/00, F28B 9/08

(54) **Vorrichtung zur Kondensatabscheidung**
Device for condensate separation
Dispositif de séparation de condensat

(43) Veröffentlichungstag der Anmeldung: 27.12.2006
(73) Patentinhaber: Messer Group GmbH, 65812 Bad Soden (DE)
(72) Erfinder: Herzog, Friedhelm, 47803, Krefeld (DE)

(56) Entgegenhaltungen:
- EP-A- 0 295 182
- WO-A-83/01996
- GB-A- 367 326
- US-A- 2 944 966
- US-A- 3 292 998

## Beschreibung

Die Erfindung betrifft eine Vorrichtung zur Reinigung eines mit einem Stoff beladenen Gasstroms mit einem Kondensator, in dem beim bestimmungsgemäßen Einsatz der Vorrichtung im Bereich einer Taupunktzone des Kondensators der Stoff zumindest teilweise kondensiert oder gefriert und welcher mit einer Zuführung und einer Ableitung für einen zu reinigenden Gasstrom sowie mit einer Zuführung und einer Ableitung für ein Kühlmedium ausgerüstet ist.

Verunreinigungen können aus Gasen durch Kondensation oder Ausfrieren abgeschieden werden. Unter "Gasen" sind hier allgemein Abluft-, Abgas oder Prozessgasströme gemeint, die aus Dampf, dampfförmigen Stoffen oder Gasen bestehen können. Insbesondere sind darunter auch relativ hoch mit Lösemitteln beladene Abluftströme gemeint, die beispielsweise bei Prozessen in der Chemie oder als Abgase aus Tanklagern entstehen können. Unter dem Begriff "Verunreinigungen" sind hier sowohl das Gas verunreinigende und zu entsorgende Schadstoffe als auch Lösemittel oder sonstige Stoffe zu verstehen, die als Wertstoffe einer weiteren Verwendung zugeführt werden können.

Zur Gasreinigung werden nach dem Stand der Technik Wärmetauscher eingesetzt, bei denen der zu reinigende Gasstrom durch Kontakt mit Wärmetauscherflächen, die verschiedenartig ausgestaltet sein können und die mittels eines Kühlmediums gekühlt werden, in Kontakt gebracht wird. Wird dabei der Taupunkt der im Gasstrom vorhandenen Verunreinigungen unterschritten, verflüssigt oder verfestigt sich zumindest ein Teil dieser Stoffe und kann vom Trägergasstrom abgetrennt werden.

Vorrichtungen dieser Art sind beispielsweise aus der FR 0 295 182 A1, der WO 83/01996 A1 und der GB 367 326 A bekannt.

Aus der DE 19517273 C1 ist ein Verfahren sowie eine Vorrichtung zur Abgasreinigung mit Wärmetauschern bekannt, bei dem in einem ersten Wärmetauscher eine Reinigung des Prozessgases in der oben beschriebenen Weise erfolgt. Um eine Rekontamination des austretenden Gases mit Kondensat zu verhindern, kommt ein zweiter Wärmetauscher zum Einsatz, in dem der Gasstrom derart geführt wird, dass er in einer aufwärtsgerichteten Strömung mit den Wärmetauscherflächen in Kontakt kommt. Das im zweiten Wärmetauscher anfallende Kondensat strömt zum Eingangsbereich des zweiten Wärmetauschers und von dort zu einem zwischen den beiden Wärmetauschern angeordneten Kondensatauslass. Da im ersten Wärmetauscher bevorzugt eine abwärtsgerichtete Strömung des Prozessgases vorliegt, strömt das in diesem ersten Wärmetauscher anfallende Kondensat zum Ausgang des Wärmetauschers und von dort zum gleichen Kondensatauslass wie das Kondensat aus dem zweiten Wärmetauscher.

Die aufwärtsgerichtete Strömung im zweiten Wärmetauscher, verbunden mit dem Temperaturgradienten innerhalb des Wärmetauschers kann dazu führen, dass das in Richtung des Eingangs des Wärmetauschers strömende Kondensat zumindest teilweise verdampft. Aufgrund der Verdampfung kühlt sich das Prozessgas lokal stark ab und es kann zur Übersättigung des Prozessgases und zur Bildung von Aerosolen kommen. Da die Aerosole im Wärmetauscher nur zu einem sehr kleinen Teil abgeschieden werden können, wird hierdurch die Effizienz der Abgasreinigung verringert und somit der Energiebedarf der Anlage erhöht.

In der US 2 944 966 A wird ein Kondensator in Form eines Röhrenwärmetauschers beschrieben, in dem das zu reinigende Prozessgas über Leit- und Umlenkbleche in Schlangenlinien von unten nach oben durch den Kondensator geführt wird. Im Betriebszustand bildet sich ein stationäres Temperaturprofil des Prozessgases aus, wobei die Temperatur umso niedriger ist, je weiter oben sich das Prozessgas befindet. Unterhalb einer bestimmten Temperatur kondensiert ein im Prozessgas enthaltenes Fluid aus und wird von den Umlenkblechen aufgefangen. Einige Umlenkbleche sind mit Kondensatableitungen ausgerüstet, durch die das Kondensat nach außen abgeführt wird. Um den Ablauf des Kondensats auch von den übrigen Umlenkblechen zu ermöglichen, weisen die Umlenkbleche Öffnungen auf, durch die das Kondensat zu jeweils darunterliegenden Umlenkblechen strömen kann, bis ein Umlenkblech mit Kondensatableitung erreicht wird. Problematisch dabei ist, dass das Kondensat dadurch von oberen Umlenkblechen in untere Bereiche des Kondensators gelangen kann, die unterhalb der Taupunktzone liegen. Dadurch besteht die Gefahr einer Rückverdampfung mit anschließender Aerosolbildung.

Aufgabe der vorliegenden Erfindung ist daher, die Bildung und Ausbreitung von Aerosolen im Prozeßgas zu vermeiden.

Gelöst ist diese Aufgabe bei einer Vorrichtung der eingangs genannten Art durch eine Vorrichtung mit den Merkmalen des Patentanspruchs 1. Vorteilhafte Weiterbildungen sind in den Unteransprüchen angegeben.

Erfindungsgemäß ist also innerhalb der Taupunktzone des Kondensators eine Einrichtung zur Kondensatableitung zwecks Entfernung des kondensierten oder gefrorenen Stoffes aus dem Kondensator vorgesehen. Das entstehende Kondensat wird also unmittelbar am Entstehungsort vom Gasstrom getrennt.

Weiterhin sieht die Erfindung vor, entlang des Strömungsweges des Gasstroms im Kondensator mehrere Einrichtungen zur Kondensatableitung vorzusehen. Dies ist besonders vorteilhaft bei mehreren Stoffen mit unterschiedlichen Taupunkten im Gasstrom oder bei schwankenden Taupunkten, wie sie etwa bei Schwankungen der Beladung oder des Drucks im Prozessgas auftreten können.

Die Einrichtung zur Kondensatabscheidung umfasst dabei ein im Wesentlichen horizontal verlaufendes Auffangsystem, das mit einer im Wesentlichen abwärts gerichtete Kondensatableitung verbunden ist. Das Kondensat sammelt sich also im Auffangsystem und fließt unter der Wirkung der Schwerkraft durch die Kondensatableitung aus dem Bereich des Gasstroms ab. Als Auffangsysteme können auch Umlenkbleche, so genannte Baffles dienen, deren eigentliche Aufgabe darin besteht, den Strömungsweg des Prozessgases im Kondensator zu bestimmen. Voraussetzung hierfür ist, dass die Baffles im Wesentlichen horizontal im Kondensator angeordnet sind und der Strömungsweg des Prozessgases im Kondensator also zumindest zwischen den Baffles vertikal verläuft. Im Bodenbereich des Kondensators ist dabei ein Auffangbehälter mit Überlauf für das Kondensat vorgesehen und die Kondensatableitungen münden unterhalb des Überlaufs aus.

Zweckmäßigerweise sind die Kondensatableitung und/oder das Kondensatbad innerhalb der Einhausung des Kondensators aufgenommen. Auf diese Weise wird ein besonders kompakter Aufbau erreicht.

Der Aufbau des Kondensators wird weiter dadurch vereinfacht, dass die mehreren Einrichtungen zur Kondensatabscheidung zugeordneten Kondensatableitungen konzentrisch zueinander durch den Kondensator geführt sind.

Anhand der Zeichnung soll nachfolgend ein Ausführungsbeispiel der Erfindung näher erläutert werden.

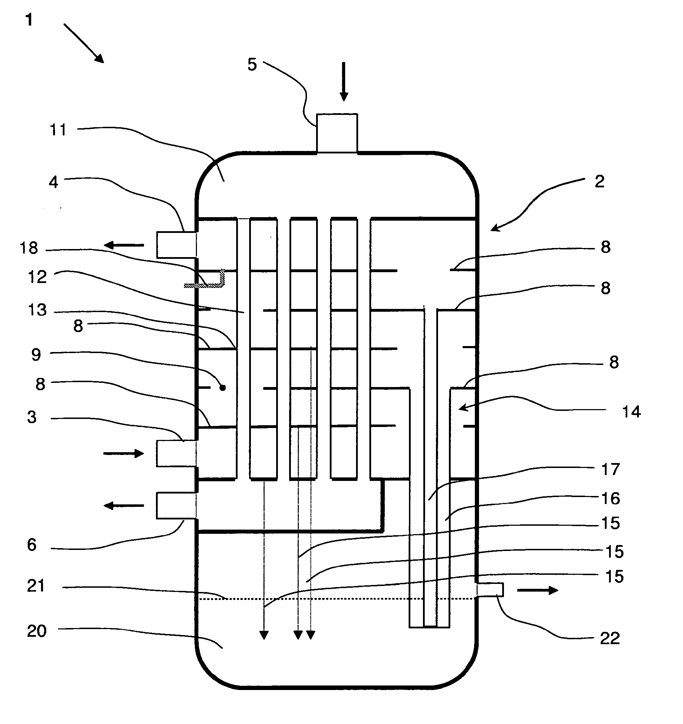

Die Zeichnung (Fig. 1) zeigt schematisch eine erfindungsgemäße Vorrichtung zur Kondensatabscheidung.

Die Vorrichtung 1 umfasst einen Kondensator 2, der mit einer Zuleitung 3 für ein zu reinigendes Prozessgas, einer im geodätischen Sinne oberhalb der Zuleitung 3 angeordneten Ausleitung 4 für das gereinigte Prozessgas, einer Zuleitung 5 für ein Kühlmedium sowie mit einer unterhalb der Zuleitung 5 angeordneten Ausleitung 6 für das erwärmte Kühlmedium verbunden ist. Das Prozessgas wird im Innern des Kondensators 2 mittels Umlenkblechen 8 in einen mäanderförmigen Strömungsweg gezwungen. Die im Wesentlichen horizontal angeordneten Umlenkbleche 8 bestehen dabei aus dem Innenquerschnitt des Kondensators angepassten und mit dessen Innenwandung hinreichend gasdicht verbundenen Scheiben, die im Ausführungsbeispiel jeweils exzentrisch mit einer Strömungsöffnung 9 versehen sind. Dabei sind die Umlenkbleche 8 derart im Kondensator 2 eingebaut, dass die Strömungsöffnungen 9 benachbarter Umlenkbleche 8 nicht übereinander angeordnet sind. Anstelle einer exzentrischen Anordnung der Strömungsöffnungen 9 können diese bei einem Teil der Umlenkbleche 8 auch konzentrisch angeordnet sein.

Das Kühlmedium gelangt durch die Zuleitung 5 in eine gasdicht vom Strömungsweg des Prozessgases getrennte Verteilerzone 11, in der das Kühlmedium gleichmäßig über den Querschnitt des Kondensators 2 verteilt wird, und von dort in mehrere, parallel zueinander angeordnete Kühlrohre 12, die sich im wesentlichen senkrecht durch den Kondensator 2 erstrecken und durch entsprechende Öffnungen 13 der Umlenkbleche hindurchgeführt sind. An den Öffnungen 13 sind die Umlenkbleche 8 jeweils flüssigkeitsdicht mit den Außenwandungen der Kühlrohre 12 verbunden. Die vorzugsweise aus einem Material mit guter Wärmeleitung bestehenden Wandungen der Kühlrohre 12 bilden eine Wärmetauscherfläche, an der ein Wärmeübergang vom Prozessgas auf das Kühlmedium stattfindet. Das erwärmte Kühlmedium strömt anschließend aus den Kühlrohren 12 zur Kühlmittelableitung 6 und kann einer weiteren Verwendung zugeführt werden. Anstelle gerader Kühlrohre 12 sind auch andere Kühlrohrformen einsetzbar. Insbesondere kann der Kondensator 2 auch mit U-förmigen Kühlrohren ausgerüstet sein.

Beim thermischen Kontakt mit dem Kühlmedium kühlt sich das beladene Prozessgas ab. Ab einem hier Taupunktzone 14 genannten Bereich ist das Prozessgas so stark abgekühlt, das der Stoff, der aus dem Gas entfernt werden soll, kondensiert und/oder ausfriert. Das Kondensat setzt sich an den Außenwänden der Kondensatrohre 12 ab, fließt entlang der Kondensatrohre 12 und wird von den Umlenkblechen 8 aufgefangen. Die im Wesentlichen horizontale Anordnung der Umlenkbleche verhindert dabei weitgehend, dass das Kondensat in tiefer liegende Abschnitte des Strömungswegs gelangt, insbesondere in solche Abschnitte, die sich strömungstechnisch vor der Taupunktzone 14 befinden. Zur Ableitung des Kondensats sind an jedem Umlenkblech 8 Kondensatrohre 15,16,17,18 angeordnet. Ja nach Einsatzgebiet der Vorrichtung 1 kann es sich auch als ausreichend erweisen, nur einen Teil der Umlenkbleche 8 mit je einem eigenen Kondensatrohr auszustatten. Die Kondensatrohre 12 sind mit den Umlenkblechen 8 verbunden und münden in entsprechende Öffnungen der Umlenkbleche 8 derart aus, dass Kondensat, das sich auf der Oberfläche der Umlenkbleche 8 befindet, in das jeweilige Kondensatrohr 15,16,17,18 einströmen kann. Zur Erläuterung der Erfindung sind im Ausführungsbeispiel die Kondensatrohre 15,16,17,18 unterschiedlich ausgebildet, ohne dass dies als Beschränkung des erfindungsgemäßen Gegenstandes verstanden werden soll. Die Kondensatrohre 15, die hier nur als gestrichelte Pfeile angedeutet sind, verlaufen von den Umlenkblechen 8 im wesentlichen senkrecht durch den Kondensator 2 hindurch und münden in einem Auffangbehälter 20, der im Bodenbereich des Kondensators angeordnet ist. Die Kondensatrohre 16,17 verlaufen ebenfalls im Wesentlichen senkrecht durch den Kondensator 2 hindurch und münden in den Auffangbehälter 20 ein. Sie sind im Ausführungsbeispiel konzentrisch zueinander angeordnet, wobei das Kondensatrohr 17 im Innern des Kondensatrohres 16 verläuft. Eine derartige, konzentrische Anordnung der Kondensatrohre kann insbesondere auch mittig durch den Kondensator hindurch verlaufen. Im Auffangbehälter 20 befindet sich während des Betriebszustandes des Kondensators 2 beständig Kondensat bis zu einer Füllhöhe 21, die durch einen Überlauf 22 definiert wird. Der Überlauf 22 ist in hier nicht weiter gezeigten Weise mit Einrichtungen zur Entsorgung oder zur Weiterverarbeitung des Kondensats verbunden. Die Kondensatrohre 15,16,17 sind derart ausgelegt, dass sie mit ihren unteren Mündungsöffnungen in das Kondensat im Auffangbehälter 20 eintauchen, um einen Gaskurzschluss zu verhindern. Insbesondere die Kondensatrohre 16,17 müssen derart ausgelegt sein, dass keine Gasströmung zwischen den konzentrisch zueinander verlaufenden Kondensatrohren möglich ist. Im Unterschied zu den Kondensatrohren 15,16,17 handelt es sich beim Kondensatrohr 18 um einen Kondensatauslass, bei dem das Kondensat direkt aus dem Kondensator herausgeführt wird. Um die Strömungsverhältnisse im Kondensator 2 nicht zu beeinträchtigen, ist das Kondensatrohr 18 vorteilhafterweise mit einer entsprechenden - hier nicht gezeigten - Armatur, beispielsweise einem Ventil versehen.

Beim bestimmungsgemäßen Einsatz der Vorrichtung 1 strömt das mit einem oder mehreren zu entfernenden Stoffen beladene Prozessgas in den Kondensator 2 ein und wird dort durch Wärmekontakt mit dem in den Kühlrohren 12 verlaufendem Kältemedium abgekühlt. Dabei kommt es in einem Bereich, der sich strömungstechnisch gesehen zwischen der Taupunktzone 14 und dem Austritt des Prozessgases aus dem Kondensator 2 an der Ausleitung 4 befindet, zu einem Kondensieren und/oder Ausfrieren der Stoffe. Das dabei entstehende Kondensat wird unmittelbar am Entstehungsort von den Kondensatrohren 15,16,17,18 aufgenommen und abgeführt. Auf diese Weise wird wirkungsvoll verhindert, dass Kondensat in den Bereich gelangt, der sich - strömungstechnisch gesehen - vor der Taupunktzone 14 befindet und in dem eine Rückverdampfung des Kondensats mit anschließender Aerosolbildung erfolgen würde.

Die Aerosolbildung kann durch zusätzliche verfahrenstechnische Maßnahmen weiter unterdrückt werden. Insbesondere ist es vorstellbar, das Kühlmedium dem Kondensator mit einer Temperatur zuzuführen, die so bemessen ist, dass innerhalb des Kondensators eine nur geringe Temperaturdifferenz zwischen dem Prozessgas und dem Kühlmedium besteht. Eine Temperierung des Kohlmediums ist auch dann von Vorteil, wenn das Prozessgas inhomogen ist und/oder der Taupunkt der zu entfernenden Stoffe schwankt und/oder mehrere Stoffe mit unterschiedlichen Taupunkten entfernt werden sollen.

### Bezugszeichenliste

- 1.: Vorrichtung
- 2.: Kondensator
- 3.: Zuleitung für Prozessgas
- 4.: Ausleitung für Prozessgas
- 5.: Zuleitung für Kühlmedium
- 6.: Ausleitung für Kohlmedium
- 7.: -
- 8.: Umlenkblech
- 9.: Strömungsöffnung
- 10.: -
- 11.: Verteilerzone
- 12.: Kühlrohr
- 13.: Öffnung
- 14.: -
- 15.: Kondensatrohr
- 16.: Kondensatrohr
- 17.: Kondensatrohr
- 18.: Kondensatrohr
- 19.: -
- 20.: Auffangbehälter
- 21.: Füllhöhe
- 22.: Überlauf

## Patentansprüche

1. Vorrichtung zur Reinigung eines mit einem Stoff beladenen Gasstroms mit einem Kondensator (2), in dem beim bestimmungsgemäßen Einsatz der Vorrichtung (1) im Bereich einer Taupunktzone (14) des Kondensators (2) der Stoff zumindest teilweise kondensiert und/oder gefriert und welcher mit einer Zuführung (3) und einer Ableitung (4) für einen zu reinigenden Gasstrom sowie mit einer Zuführung (5) und einer Ableitung (6) für ein Kühlmedium ausgerüstet ist, wobei
zumindest innerhalb der Taupunktzone (14) des Kondensators (2) längs des Strömungsweges des Gasstroms mehrere Einrichtungen (8, 15,16,17,18) zur Kondensatabscheidung zwecks Entfernung des kondensierten oder gefrorenen Stoffes aus dem Kondensator (2) angeordnet sind, die jeweils ein im wesenttichen horizontal verlaufendes
Auffangsystem aufweisen, das mit einer im wesentlichen abwärts gerichteten Kondensatableitung (15,16,17) strömungsverbunden ist, **dadurch gekennzeichnet,**
**dass** im Bodenbereich des Kondensators (2) ein Auffangbehälter (20) mit Überlauf (22) für das Kondensat vorgesehen ist, und die Kondensatableitungen (15, 16, 17) unterhalb des Überlaufs ausmünden.

2. Vorrichtung nach Anspruch 1, **dadurch gekennzeichnet, dass** die Kondensatableitungen (15, 16, 17) zum Verhindern eines Gaskurzschlusses mit mechanischen Armaturen, wie Ventilen ausgerüstet sind.

3. Vorrichtung nach Anspruch 1 oder 2, **dadurch gekennzeichnet, dass** die Kondensatableitung/en (15,16,17) und/oder das Kondensatbad (20) innerhalb einer Einhausung des Kondensators (2) aufgenommen sind.

4. Vorrichtung nach einem der vorhergehenden Ansprüche, **dadurch gekennzeichnet, dass** die mehreren Einrichtungen zur Kondensatabscheidung zugeordneten Kondensatableitungen (16,17) konzentrisch zueinander durch den Kondensator (2) geführt sind.

## Claims

1. Device for purifying a gas flow which is laden with a substance, having a condenser (2) in which, during intended use of the device (1), the substance at least partially condenses and/or freezes in the region of a dew point zone (14) of the condenser (2) and which is equipped with a supply line (3) and a discharge line (4) for a gas flow to be purified and also with a supply line (5) and a discharge line (6) for a cooling medium,
wherein
a plurality of devices (8, 15, 16, 17, 18) for condensate separation for the purpose of removing the condensed or frozen substance from the condenser (2) are arranged at least within the dew point zone (14) of the condenser (2) along the flow path of the gas flow, which devices each have a substantially horizontally running collecting system which is connected in terms of flow to a substantially downwardly directed condensate discharge line (15, 16, 17),
**characterized**
**in that** a collecting tank (20) with an overflow (22) for the condensate is provided in the base region of the condenser (2), and the condensate discharge lines (15, 16, 17) open out below the overflow.

2. Device according to Claim 1, **characterized in that** the condensate discharge lines (15, 16, 17) are equipped with mechanical fittings, such as valves, in order to prevent a gas short circuit.

3. Device according to Claim 1 or 2, **characterized in that** the condensate discharge line(s) (15, 16, 17) and/or the condensate bath (20) are accommodated within a housing of the condenser (2).

4. Device according to one of the preceding claims, **characterized in that** condensate discharge lines (16, 17) assigned to the plurality of devices for condensate separation are guided concentrically with respect to one another through the condenser (2).

## Revendications

1. Dispositif d'épuration d'un flux de gaz chargé d'une matière, comprenant un condenseur (2) dans lequel, lors d'une utilisation prévue du dispositif (1), la matière se condense et/ou se congèle au moins partiellement dans la région d'une zone de point de rosée (14) du condenseur (2) et lequel est équipé d'une alimentation (3) et d'une évacuation (4) pour un flux de gaz à épurer ainsi que d'une alimentation (5) et d'une évacuation (6) pour un réfrigérant,
plusieurs dispositifs (8, 15, 16, 17, 18) pour la séparation de condensat en vue d'éliminer du condensat (2) la matière condensée ou congelée étant disposés au moins à l'intérieur de la zone de point de rosée (14) du condenseur (2) le long de la voie d'écoulement du flux de gaz, lesquels dispositifs comprennent respectivement un système collecteur s'étendant essentiellement horizontalement qui est en liaison fluidique avec une évacuation de condensat (15, 16, 17) orientée essentiellement vers le bas,
**caractérisé en ce que**,
dans la région de fond du condenseur (2), un récipient collecteur (20) doté d'un trop-plein (22) pour le condensat est prévu et les évacuations de condensat (15, 16, 17) débouchent en dessous du trop-plein.

2. Dispositif selon la revendication 1, **caractérisé en ce que** les évacuations de condensat (15, 16, 17) sont équipées de robinets mécaniques comme des vannes pour empêcher un court-circuit de gaz.

3. Dispositif selon la revendication 1 ou 2, **caractérisé en ce que** les évacuations de condensat (15, 16, 17) et/ou la cuve de condensat (20) sont reçues à l'intérieur d'une enceinte du condenseur (2).

4. Dispositif selon l'une quelconque des revendications précédentes, **caractérisé en ce que** les plusieurs dispositifs pour la séparation de condensat d'évacuations de condensat associées (16, 17) sont guidés à travers le condenseur (2) de manière concentrique les uns aux autres.
